# EUROPÄISCHE PATENTSCHRIFT

(11) **EP 2 934 729 B1**
(45) Veröffentlichungstag und Bekanntmachung des Hinweises auf die Patenterteilung: **18.03.2020**
(21) Anmeldenummer: 13821069.5
(22) Anmeldetag: 18.12.2013
(51) Int. Cl.: B01F 1/00, B01F 5/10, B01F 15/04, B01F 15/06, A23L 5/00

(54) **VERFAHREN SOWIE ANLAGE ZUM HERSTELLEN EINES MISCHPRODUKTES AUS WENIGSTENS EINER FLÜSSIGEN HAUPTKOMPONENTE UND WENIGSTENS EINER ZUSATZKOMPONENTE**
METHOD AND ARRANGEMENT FOR PRODUCING A MIXED PRODUCT FROM AT LEAST ONE LIQUID MAIN COMPONENT AND AT LEAST ONE ADDITIONAL COMPONENT
PROCÉDÉ ET INSTALLATION POUR PRÉPARER UN PRODUIT MÉLANGÉ CONSTITUÉ D'AU MOINS UN COMPOSANT PRINCIPAL LIQUIDE ET D'AU MOINS UN COMPOSANT SUPPLÉMENTAIRE

(30) Priorität: 19.12.2012 DE 102012024806
(43) Veröffentlichungstag der Anmeldung: 28.10.2015
(73) Patentinhaber: KHS GmbH, 44143 Dortmund (DE)
(72) Erfinder: CHERDRON, Tobias, 55543 Bad Kreuznach (DE); ROSCHY, Johannes, 55545 Bad Kreuznach (DE)
(86) Internationale Anmeldenummer: PCT/EP2013/003841
(87) Internationale Veröffentlichungsnummer: WO 2014/095061

(56) Entgegenhaltungen:
- EP-A1- 0 917 906
- DE-A1- 3 221 056
- DE-B- 1 167 313
- US-A- 3 816 427

## Beschreibung

Die Erfindung bezieht sich auf ein Verfahren gemäß Patentanspruch 1.

Insbesondere in der Getränkeindustrie ist die Herstellung von Mischprodukten durch Mischen wenigstens einer flüssigen Hauptkomponente mit wenigstens einer Zusatzkomponente bekannt. Die Hauptkomponente ist dabei beispielsweise Wasser und die Zusatzkomponente eine solche in trockener oder flüssiger Form, beispielsweise in Form von Farbstoffen oder Farbpigmenten, Geschmack gebenden Stoffen, wie z.B. Salzen, Zitronensäure, Zucker, Fruchtsirup usw. Das Vermischen der Komponenten zur Bildung einer die wenigstens eine Zusatzkomponente enthaltende Lösung oder Suspension erfolgt in der Regel bei einer gegenüber der Umgebungstemperatur deutlich erhöhten Mischtemperatur, beispielsweise bei einer Mischtemperatur im Bereich zwischen 40°C und 90°C, und zwar beispielsweise chargenweise in einem Eintank-Batch-Verfahren.

Bei diesem Verfahren werden in einen Mischtank oder Mischbehälter die für die Rezeptur oder Dosierung des Mischproduktes notwendigen Mengen der Hauptkomponente und der wenigstens einen Zusatzkomponente eingebracht und dann bei der Mischtemperatur miteinander vermischt. Nach dem Mischen erfolgt jeweils ein vollständiges Entleeren des Mischbehälters. Erst nach dieser Entleerung kann in dem Mischbehälter eine neue Charge des Mischproduktes angemischt werden. Dies bedeutet, dass eine kontinuierliche Bereitstellung des Mischproduktes an eine dieses Produkt weiter verarbeitenden Einrichtung nicht möglich ist. Nachteilig ist hier insbesondere auch, dass die Wärmeenergie des auf die Mischtemperatur erhitzten Mischproduktes mit dem Ableiten dieses Produktes verloren geht. Wird auf eine Erhitzung auf die erhöhte Mischtemperatur verzichtet, so ergibt sich eine in der Regel nicht vertretbare Erhöhung der Mischzeit.

Bekannt ist auch die Verwendung von zwei Mischbehältern, in denen das Mischen und Ableiten der Mischprodukte aus den Mischbehältern zeitlich versetzt erfolgt, sodass zumindest theoretisch das Mischprodukt als kontinuierlicher Strom aus der betreffenden Anlage abgeführt werden kann, allerdings nur dann, wenn die Gesamtzeit für das Mischen des Mischproduktes in einem Mischbehälter, einschließlich der Zeit für das Einbringen der Hauptkomponente und der Zusatzkomponente sowie das Erhitzen der Komponenten auf die Mischtemperatur, nicht größer ist als diejenige Zeit, in der der andere Mischbehälter entleert wird. Dies ist in der Regel aber nicht der Fall.

Grundsätzlich könnte dieser Nachteil durch eine Erhöhung der Anzahl der Mischbehälter behoben werden, beispielsweise auf wenigstens drei Mischbehälter, in denen das Mischen des Mischproduktes und das Entleeren zeitlich versetzt erfolgt, allerdings auch wiederum so, dass jedem Mischbehälter erst nach seinem vollständigen Entleeren die wenigstens eine Hauptkomponente und die wenigstens eine Zusatzkomponente erneut zugeführt werden. Die hohe Anzahl an Mischbehältern und der sich hierdurch ergebende erhöhte Aufwand u.a. an Leitungen, Sensoren, Steuerventilen usw. bedeutet ein hohes, vielfach nicht vertretbares Investitionsvolumen sowie einen erhöhten Steuerungsaufwand.

Bekannt wurden ebenfalls Vorrichtungen gemäß der DE 32 21 056 A1. Im hier interessierenden Rahmen offenbart diese Schrift eine Mischvorrichtung, welche sich auch für den chargenweisen Betrieb eignet. Für den chargenweisen Betrieb ist vorgesehen, dass der Mischbehälter nach dem Ausmischen einer Charge vollständig entleert wird, und dass die Neubefüllung des Mischbehälters erst im Anschluss an die vollständige Entleerung erfolgt.

Die im Wesentlichen selbe technische Lehre offenbart auch die EP 0 917 906 A1.

Ebenfalls bekannt wurden die Schriften US 3,816,427 und DE 1 167 313. Beide Schriften befassen sich mit Vorrichtungen und Verfahren zur kontinuierlichen Ausmischung von Mischprodukten.

Aufgabe der Erfindung ist es, ein Verfahren aufzuzeigen, mit dem eine kontinuierliche oder aber nahezu kontinuierliche Herstellung von Mischprodukten aus wenigstens einer flüssigen Hauptkomponente und zumindest einer flüssigen oder trockenen Zusatzkomponente bei reduziertem anlagetechnischem Aufwand möglich ist.

Zur Lösung dieser Aufgabe ist ein Verfahren entsprechend dem Patentanspruch 1 ausgebildet.

Auch bei dem erfindungsgemäßen Verfahren ist die flüssige Hauptkomponente beispielsweise Wasser oder ein organisches Lösungsmittel oder Mischphasen aus verschiedenen flüssigen Medien und/oder aus wenigstens einem flüssigen Medium und aus wenigstens einem festen Bestandteil. Trockene Zusatzkomponenten sind insbesondere solche, die in der Hauptkomponente lösbar oder suspendierbar sind und/oder eine granulatartige bis pulverförmige Konsistenz aufweisen, beispielsweise Farbpigmente und/oder Geschmack gebende Stoffe oder Aromastoffe, wie z.B.

Salze, Zitronensäure, Zucker usw. Flüssige Zusatzkomponenten sind insbesondere solche mit einer flüssigen bis zähflüssigen Konsistenz, z.B. flüssige, Geschmack gebende Stoffe oder Zusätze bzw. Aromastoffe, z. B. Sirupe, Fruchtkonzentrate usw.

"Mischen" bedeutet im Sinne der Erfindung bei einer Zusatzkomponente welche in der jeweiligen Hauptkomponente lösbar ist, dass diese Zusatzkomponente nach dem Mischen in der Hauptkomponente zumindest teilweise gelöst ist.

Bei einer in der jeweiligen Hauptkomponente nicht lösbaren Zusatzkomponente bedeutet Mischen im Sinne der Erfindung, dass diese nicht in der Hauptkomponente lösbare Zusatzkomponente in der Hauptkomponente suspendiert ist.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

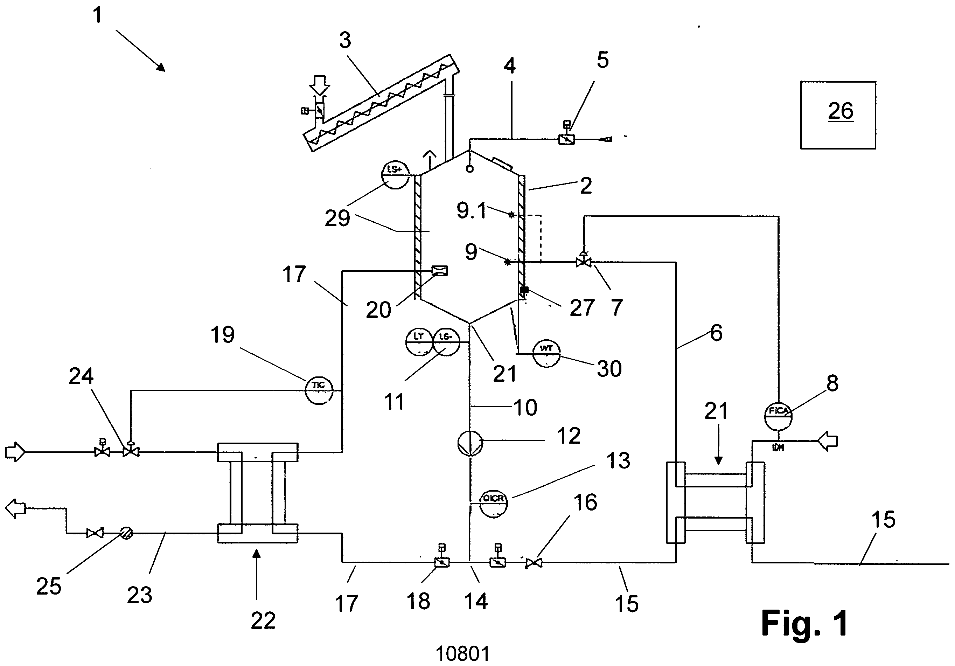

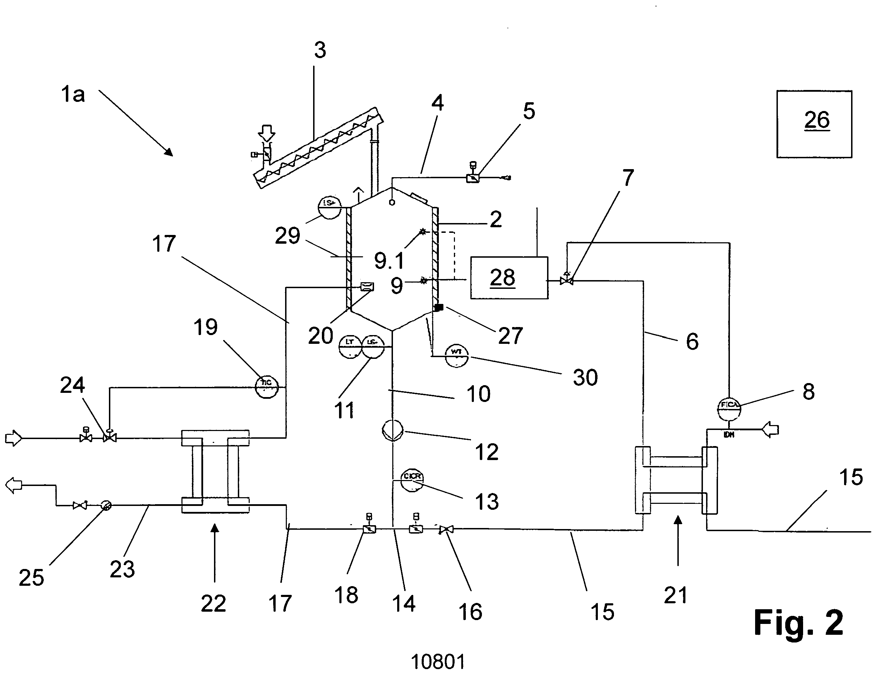

Die Erfindung wird im Folgenden anhand der Figuren 1 und 2, die jeweils in schematischer Funktionsdarstellung eine Anlage 1 bzw. 1a zum Mischen wenigstens einer Zusatzkomponente mit wenigstens einer flüssigen Hauptkomponente zeigen, näher erläutert.

Zentraler Bestandteil der in der Figur 1 dargestellten Anlage 1 ist ein einziger Mischbehälter 2 zum Mischen der wenigstens einen Zusatzkomponente mit der wenigstens einen flüssigen Hauptkomponente. Die Anlage 1 umfasst weiterhin folgende Funktionselemente:
- Eine Dosier- und Fördereinrichtung 3, die zum dosierten Zuführen einer festen oder trockenen Zusatzkomponente in den Mischbehälter 2 dient und hierfür in den oberen Bereich des Mischbehälters 2 mündet;
- Eine Dosierleitung 4 mit Steuerventil 5, die zum Einbringen einer flüssigen Zusatzkomponente in dem Mischbehälter 2 dient und hierfür ebenfalls in den oberen Bereich des Mischbehälters 2 mündet;
- Eine Leitung 6 mit Steuerventil 7 und Durchflussmesser 8, die zum Zuführen der frischen Hauptkomponente in den Mischbehälter 2 dient und hierfür in diesen Behälter mit einem Einlass 9, vorzugsweise mit einem Einlass 9.1 mündet;
- Eine mit einem Auslass 2.1 des Mischbehälters 2 am Boden dieses Behälters verbundene Leitung 10 mit Temperatursensor und/oder Füllstandssensor 11, Pumpe 12 und Messgerät 13 zwischen dem Auslass 2.1 und einem Anschluss 14;
- Eine Leitung 15 mit Steuerventil 16, die zum Abführen des fertigen Mischproduktes aus dem Mischbehälter 2 und aus der Anlage 1 dient und hiefür mit dem Anschluss 14 verbunden ist;
- Eine Leitung 17 mit Steuerventil 18 und Temperatursensor 19, die Teil eines Heiz- und/oder Flüssigkeitskreislaufs ist und hierfür mit einem Einlass 20 in den unteren Bereich des Mischbehälters 2 mündet und ebenfalls mit dem Anschluss 14 verbunden ist;
- einen Wärmetauscher 21, dessen Sekundärseite Bestandteil der Leitung 6 und dessen Primärseite Bestandteil der Leitung 15 ist;
- einen Wärmetauscher 22, dessen Sekundärseite Bestandteil der Leitung 17 und dessen Primärseite Bestandteil eines Heizkreises, d.h. einer Leitung 23 ist, die von einem flüssigen oder gasförmigen Wärme transportierenden Medium, beispielsweise von heißem Wasser durchströmt wird.

In der Leitung 23 sind u.a. ein Steuerventil 24 sowie eine Umwälzpumpe 25 vorgesehen, und zwar bei der dargestellten Ausführungsform bezogen auf die Strömungsrichtung des Wärme transportierenden Mediums das Steuerventil vor dem Wärmetauscher 22 und die Umwälzpumpe 25 nach dem Wärmetauscher 22. Mit 26 ist eine Anlagensteuerung, beispielsweise in Form eines Prozessrechners bezeichnet, mit der die einzelnen Funktionen der Anlage 1 gesteuert werden. Mit 27 ist eine im unteren Bereich des Mischbehälters 2 vorgesehene Probeentnahmeeinrichtung bezeichnet, mit der manuell eine Entnahme von Proben aus dem Mischbehälter 2 möglich ist.

Wie die Figur 1 insbesondere auch zeigt, befinden sich die Einlässe der Dosier- und Fördereinrichtung 3, der Dosierleitung 4 sowie die Einlässe 9 bzw. 9.1 in vertikaler Richtung nicht nur über dem Auslass 2.1 des Mischbehälters 2, sondern auch oberhalb des Einlasses 20 der Leitung 17.

Mit der Anlage 1 ist insbesondere ein Verfahren möglich, bei dem trotz Verwendung nur eines einzigen Mischbehälters 2 das fertige Mischprodukt, d.h. das Mischprodukt mit der geforderten Dosierung, kontinuierlich oder im Wesentlichen kontinuierlich über die Leitung 15 abgeführt werden kann und dabei kontinuierlich oder im Wesentlichen kontinuierlich durch Zuführen von frischer Hauptkomponente über die Leitung 6 die Herstellung der nächsten Charge des Mischproduktes vorbereitet wird.

Durch diese Vorgehensweise ergibt sich innerhalb des Mischbehälters 2 eine Art Schichtung, und zwar in der Form, dass im unteren Bereich des Mischbehälters 2 das fertige Mischprodukt und darüber die frische, flüssige Hauptkomponente, wobei eine Vermischung von fertigem Mischprodukt und frischer Hauptkomponente soweit als möglich vermieden wird.

Und eventuell zumindest eine Teilmenge die wenigstens eine Zusatzkomponente im noch nicht vollständig ausgemischten Zustand aufgenommen sind.

Durch diese Vorgehensweise ergibt sich eine erhebliche Zeitersparnis, da der einzige Mischbehälter 2 dann, wenn das Mischprodukt vollständig abgeführt wurde, bereits soweit mit frischer Hauptkomponente gefüllt ist, dass unverzüglich mit dem Zuführen der wenigstens einen Zusatzkomponente über die Dosier- und Fördereinrichtung 3 und/oder die Dosierleitung 4 und mit dem entsprechendem Durchmischen begonnen werden kann.

Weiterhin ist mit der Anlage 1 insbesondere auch ein weiteres Verfahren möglich, bei dem ein wesentlicher Unterschied zu dem zuvor beschriebenen Verfahren darin besteht, dass der frischen Hauptkomponente bereits während ihrer Zuführung über eine Dosiervorrichtung, beispielsweise über die separate Dosiervorrichtung 28 wenigstens eine Zusatzkomponente zugeführt wird.

Durch diese Vorgehensweise kann bereits eine gewisse Anreicherung oder Mischung zwischen Grundkomponente und Zusatzkomponente erzielt werden, wodurch die Zeit für das nachfolgende Ausmischen erheblich vermindert wird, und wobei ebenfalls eine gewisse Ausmischung erreicht wird, ohne dass dabei die Qualität des noch in dem Ausmischbehälter 2 befindlichen fertigen Mischprodukts vermindert wird.

Um die für das Mischen des Mischproduktes benötigte Zeit zu reduzieren, erfolgt das Mischen bei einer deutlich über der Umgebungstemperatur erhöhten Mischtemperatur, beispielsweise bei einer Mischtemperatur im Bereich zwischen 40°C und 90°C, vorzugsweise im Bereich zwischen 80 und 85°C.

Im Einzelnen wird das Verfahren vorteilhafter Weise wie folgt durchgeführt:
Bei Produktionsaufnahme wird zunächst dem Mischbehälter 2 über die Leitung 6 eine ausreichende Menge an der flüssigen Hauptkomponente zugeführt. Überwacht und gesteuert wird dies mit dem Durchflussmesser 8 und dem Steuerventil 7. Gleichzeitig erfolgt über die Dosier- und Fördereinrichtung 3 und/oder über die Dosierleitung 4 die Zugabe der wenigstens einen Zusatzkomponente. Das so im Mischbehälter 2 erzeugte Gemisch wird bei geöffnetem Steuerventil 18 und aktivierter Pumpe 12 am Auslass 2.1 des Mischbehälters 2 entnommen und über die Leitung 17 und den Einlass 20 in den Mischbehälter zurück gefördert. Bei diesem Kreislauf, der beispielsweise auch mehrfach durchgeführt wird, erfolgt über den Wärmetauscher 22 bzw. über das der Primärseite dieses Wärmetauschers zugeführte Heizmedium oder Wärme transportierende Medium das Aufheizen des Mischproduktes auf die erforderliche Mischtemperatur. Die Temperatur des im Mischbehälter 2 entnommene Mischproduktes wird beispielsweise mit den Sensoren 11 und/oder 19 überwacht und gesteuert bzw. geregelt, wobei der Sensor 11 beispielsweise die in diesem Betriebszustand als Umwälzpumpe arbeitende Pumpe 12 steuert und der Sensor 19 das Steuerventil 24 im Primärkreis des Wärmetauschers 22.

Durch das Umwälzen des Mischproduktes über die Leitung 17 erfolgt auch das optimale Vermischen der Hauptkomponente mit der wenigstens einen Zusatzkomponente. Die Qualität des Mischproduktes wird mit dem Messgerät 13 überwacht, d.h. mit diesem Gerät werden insbesondere auch die Zugabe der wenigstens einen Zusatzkomponente, d.h. die Dosier- und Fördereinrichtung 3 und/oder das Steuerventil 5 der Dosierleitung 4 gesteuert.

Hat das Mischprodukt entsprechend den von dem Messgerät 13 gelieferten Messwerten die erforderliche Qualität erreicht, so kann das Abpumpen dieses fertigen Mischproduktes aus dem Mischbehälter 2 durch Öffnen des Steuerventils 16 eingeleitet werden.

Parallel zum Abpumpen des fertigen Mischproduktes wird dem Mischbehälter über die Leitung 6 überwacht mit dem Durchflussmesser 8 und gesteuert mit dem Steuerventil 7 frische Hauptkomponente zugeführt, und zwar in den oberen Bereich des Innenraumes des Mischbehälters 2, vorzugsweise über den Einlass 9.1, der sich in vertikaler Richtung deutlich über dem Einlass 20 befindet.

Über den Wärmetauscher 21 erfolgt dabei eine zumindest teilweise Übertragung der Wärmeenergie des aus der Anlage 1 abgeführten fertigen Mischproduktes an die der Anlage 1 zugeführte frische Hauptkomponente, d.h. ein Vorerhitzen dieser Hauptkomponente und ein Abkühlen des fertigen Mischproduktes.

In Abhängigkeit von der mit dem Durchflussmesser 8 gemessenen Menge der zugeführten Hauptkomponente, aber vorzugsweise auch in Abhängigkeit von dem wenigstens einen Messsignal des Messgerätes13 kann die Zugabe der wenigstens einen Zusatzkomponente bereits jetzt erfolgen, wobei die wenigstens eine Zusatzkomponente lediglich in einer solchen Menge zugegeben wird, dass eine Überdosierung in jedem Fall ausgeschlossen ist.

Dazu werden die Dosier- und Fördereinrichtung und/oder das Steuerventil 5 der Dosierleitung entsprechend gesteuert bzw. geregelt.

Ergeben die Messsignale des Messgerätes 13, dass die aus dem Mischbehälter 2 abgeführte fertige Mischung den Qualitätsanforderungen nicht mehr genügt, so wird das weitere Abpumpen der fertigen Mischung gestoppt. Anschließend wird die im Mischbehälter 2 befindlichen, noch nicht in ausreichendem Maße vermischten Komponenten der fertigen Mischung mit einander vermischt.

Dazu ist vorgesehen, dass während der Misch- oder Vermischungsphase der Anlage 1, d.h. also nach der Entnahme des fertigen Mischproduktes, das im Mischbehälter 2 befindliche noch nicht ausreichend ausgemischte Gemisch über den Auslass 2.1 durch die Pumpe 12 abgezogen wird. Anschließend wird die Mischung ausgehend vom Anschluss 14 über die Messeinrichtung 13, das geöffnete Steuerventil 18 und die Sekundärseite des Wärmetauschers 22 zurück in den Mischbehälter 2 geleitet. Durch diese Vorgehensweise wird zum einen erreicht, dass die erforderliche Mischtemperatur zumindest im unteren Bereich des Mischbehälters 2 aufrechterhalten wird. Zum anderen wird durch das auch mehrmalige Umpumpen erreicht, dass die frische Hauptkomponente und die wenigstens eine Zusatzkomponente optimal miteinander Vermischt werden.

Da das in Ausmischung befindliche Gemisch mehrmals die Messeinrichtung 13 passiert, kann auf diese Weise u.a. auch die Dosierung der wenigstens einen Zusatzkomponente überwacht werden. Sollte eine zu geringe Konzentration der mindestens einen Zusatzkomponente vorliegen, so kann weiter Zusatzkomponente nach dosiert werden.

Stellt die Messeinrichtung 13 fest, dass die Qualitätsparameter zumindest über einen längeren Zeitraum eingehalten werden, so kann darauf geschlossen werden, dass der Prozess des Dosierens und Ausmischens abgeschlossen sind, das Abpumpen von fertigem Produkt kann erneut erfolgen.

Weiterhin kann alternativ vorgesehen sein, dass das Ausmischen der im Mischbehälter befindlichen Komponenten kontinuierlich erfolgt und zwar in der Art und Weise, dass die Steuerung und Regelung dabei beispielsweise so erfolgen, dass mit den Messsignal des Durchflussmessers 8 eine Einstellung der Dosier- und Fördereinrichtung 3 und/oder des Steuerventils 5 in der Dosierleitung erfolgen und das von dem Messgerät 13 gelieferte Messsignal als Istwert für eine Regelung der Zugabe der wenigstens einen Zusatzkomponente verwendet wird, und zwar in einem Regelkreis, in dem das von dem Messgerät 13 gelieferte wenigstens eine Messsignal als Istwert mit einem Sollwert verglichen wird, der in der Anlagensteuerung 26 für das jeweilige Mischprodukt abgelegt ist.

Eine kontinuierliche Entnahme des fertigen Mischproduktes ist also dadurch möglich, dass im oberen Bereich des Mischbehälters 2 gesteuert durch den Durchflussmesser 8 ständig durch Zumischen der wenigstens einen Zusatzkomponente die für das fertige Mischprodukt erforderliche Zusammensetzung bzw. Dosierung aus Hauptkomponente und Zusatzkomponente erzeugt wird, und dass mit dem Messgerät 13 die Qualität des Mischproduktes überwacht und gegebenenfalls aufgrund des Messsignals des Messgerätes13 eine Erhöhung oder Reduzierung der Zugabe der wenigstens einen Zusatzkomponente erfolgt.

Die Reinigung der Anlage 1 bzw. des Mischbehälters 2 erfolgt bevorzugt über die Dosierleitung 4, die dann bei solchen Anwendungen der Anlage 1, bei denen ausschließlich nur wenigstens eine feste Zusatzkomponente der wenigstens einen Hauptkomponente beigemischt wird, nur für diese Reinigung verwendet wird.

Die Figur 2 zeigt eine Anlage 1a, die sich von der Anlage 1 im Wesentlichen nur dadurch unterscheidet, dass in der Leitung 6 eine Mischeinrichtung 28 vorgesehen ist, in der der Hauptkomponente wenigstens eine feste Zusatzkomponente und/oder wenigstens eine flüssige Zusatzkomponente zugegeben wird, bevor die Hauptkomponente in den eigentlichen Mischbehälter 2 eingeleitet wird. In dem Mischbehälter 2 erfolgt dann zumindest in der oben beschriebenen Weise durch Umwälzen der Komponenten über die Leitung 17 und die Sekundärseite des Wärmetauschers 22 ein Erhitzen und Vermischen der Komponenten sowie über die Leitung 15 ein Ableiten des Mischproduktes aus dem Mischbehälter 2 sofern das in der Leitung 10 geführte Mischprodukt den Messsignalen des Messgerätes 13 entsprechend die erforderliche Qualität aufweist. Durch die Zugabe der wenigstens einen Zusatzkomponente in die Hauptkomponente vor dem Einleiten der Komponente in den Mischbehälter 2 kann die Gesamtzeit für das Mischen des Mischproduktes erheblich verkürzt werden. Bei der Anlage 1a besteht aber auch die Möglichkeit, wenigstens eine weitere Zusatzkomponente über die Dosier- und Fördereinrichtung 3 und/oder die Dosierleitung 4 in den Mischbehälter 2 einzubringen.

Die mit dem Messgerät 13 überwachte Qualität des Mischproduktes ist primär das Mischungsverhältnis zwischen der wenigstens einen Hauptkomponente und der wenigstens einen Zusatzkomponente. Mit dem Messgerät 13 wird daher zumindest ein diesem Mischungsverhältnis entsprechender Parameter bzw. zumindest ein dieses Mischverhältnis repräsentierender Parameter erfasst, beispielsweise Trübung, Farbe, Brix-Wert, elektrischer Leitwert, pH-Wert und/oder Dichte des Mischproduktes. Bevorzugt ist das Messgerät 13 so ausgebildet, dass es mehrere das Mischungsverhältnis der wenigstens einen Hauptkomponente und der wenigstens einen Zusatzkomponente repräsentierende Parameter erfasst.

Wesentlich bei den beschriebenen Verfahren ist auch, dass die Hauptkomponente dem Mischbehälter 2 während des Betriebes so zugeführt wird, dass hierdurch die Qualität des fertigen Mischproduktes im unteren Bereich des Mischbehälters 2 nicht beeinträchtigt wird, d.h. das dortige Verhaltnis von Hauptkomponente und Zusatzkomponente(n) nicht gestört wird. Dies wird dadurch erreicht, dass die frische Zusatzkomponente über den Einlass 9, bevorzugt aber über den Einlass 9.1 zugeführt wird, die beide deutlich über dem Niveau des unteren, von dem fertigen Mischprodukt eingenommenen Mischbehälterraumes liegen. Das Zuführen der frischen Hauptkomponente in den Mischbehälter 2 erfolgt weiterhin bevorzugt drucklos oder im Wesentlichen drucklos und/oder fein verteilt über eine mehrere Düsenöffnungen aufweisende Düsenanordnung, wofür die Einlasse 9 und 9.1 beispielsweise duschkopfartig ausgebildet sind, oder in kleineren Tropfen oder aber versprüht, beispielsweise nebelartig versprüht, wodurch ebenfalls ein Vermischen der zugeführten frischen Hauptkomponente mit dem fertigen Mischprodukt im unteren Bereich des Mischbehälters 2 verhindert wird.

So ist es insbesondere auch möglich, die Mischtemperatur so zu wählen, dass sie zugleich als Pasteurisationstemperatur wirksam ist.

Weiterhin ist es auch möglich, im Mischbehälter 2 insbesondere den Zufluss der frischen Hauptkomponente steuernde Füllstandssensoren 29 vorzusehen und/oder den Mischbehälter 2 auf Wägezellen 30 zu installieren, mit deren Messsignalen dann das Gewicht des Mischbehälters 2 erfasst und die Zugabe der wenigstens einen Hauptkomponente und der wenigstens einen Zusatzkomponente in den Mischbehälter, d.h. das Mischungsverhältnis oder die Komponentendossarge gesteuert wird. Die wenigstens eine Hauptkomponente und die wenigstens eine Zusatzkomponente werden hierbei dann vorzugsweise zeitlich nacheinander in dem Mischbehälter 2 eingebracht.

### Bezugszeichenliste

- 1, 1a: Anlage
- 2: Mischbehälter
- 2.1: Auslass des Mischbehälters
- 3: Dosier- und Fördereinrichtung
- 4: Dosierleitung
- 5: Steuerventil
- 6: Leitung für Hauptkomponente
- 7: Steuerventil
- 8: Durchflussmesser
- 9, 9.1: Einlass
- 10: Leitung
- 11: Temperatur- und/oder Füllstandssensor
- 12: Pumpe
- 13: Messeinrichtung
- 14: Anschluss
- 15: Leitung
- 16: Steuerventil
- 17: Leitung
- 18: Steuerventil
- 19: Temperatursensor
- 20: Einlass
- 21, 22: Wärmetauscher
- 23: Leitung
- 24: Steuerventil
- 25: Pumpe
- 26: Anlagensteuerung
- 27: Probenentnahmeeinrichtung
- 28: Mischeinrichtung
- 29: Füllstandskontrolle oder Füllstandssensor
- 30: Wägezelle

## Patentansprüche

1. Verfahren zum chargenweisen Herstellen von Mischprodukten, insbesondere zum Herstellen vom Mischprodukten in Form von Getränken, jeweils durch Mischen wenigstens einer Zusatzkomponente mit mindestens einer flüssigen Hauptkomponente, unter Verwendung eines einzigen Mischbehälters (2), aus dem das fertige Mischprodukt über eine Leitung (15) zur weiteren Verwendung abgeführt wird, wobei der Mischbehälter (2) ausgestattet ist mit
- einem Auslass (2.1) am Boden des Mischbehälters (2);
- einer Dosier- und Fördereinrichtung (3), die zum dosierten Zuführen einer festen oder trockenen Zusatzkomponente in den Mischbehälter (2) dient und hierfür in den oberen Bereich des Mischbehälters (2) mündet;
- einer Dosierleitung (4) mit einem ersten Steuerventil (5), die zum Einbringen einer flüssigen Zusatzkomponente in den Mischbehälter (2) dient und hierfür ebenfalls in den oberen Bereich des Mischbehälters (2) mündet;
- einer ersten Leitung (6) mit einem zweiten Steuerventil (7) und einem Durchflussmesser (8), die zum Zuführen der frischen Hauptkomponente in den Mischbehälter (2) dient und hierfür in diesen Behälter mit einem ersten Einlass (9), und vorzugsweise mit einem zweiten Einlass (9.1) mündet;
- einer mit dem Auslass (2.1) des Mischbehälters (2) verbundenen zweiten Leitung (10) mit einem Temperatursensor und/oder Füllstandssensor (11), mit einer Pumpe (12) und mit einem Messgerät (13) zwischen dem Auslass (2.1) und einem Anschluss (14);
- einem Füllstandssensor (29);
- einer dritten Leitung (15) mit einem dritten Steuerventil (16), die zum Abführen des fertigen Mischproduktes aus dem Mischbehälter (2) und aus der Anlage (1) dient und hierfür mit dem Anschluss (14) verbunden ist;
- einer vierten Leitung (17) mit einem vierten Steuerventil (18) und hierfür mit einem dritten Einlass (20) in den unteren Bereich des Mischbehälters (2) mündet und ebenfalls mit dem Anschluss (14) verbunden ist
wobei sich die Einlässe der Dosier- und Fördereinrichtung (3), der Dosierleitung (4) sowie die erste und gegebenenfalls zweite Einlässe (9, 9.1) in vertikaler Richtung über dem Auslass (2.1) des Mischbehälters (2) und oberhalb des dritten Einlasses (20) der vierten Leitung (17) befinden,
wobei dem Mischbehälter (2) die wenigstens eine Zusatzkomponente über die Dosier- und Fördereinrichtung (3) und/oder über die Dosierleitung (4) und die wenigstens eine Hauptkomponente über die erste Leitung (6) bereits dann zugeführt wird, wenn sich noch fertiges Mischprodukt im Mischbehälter (2) befindet und dieses aus dem Mischbehälter (2) über die dritte Leitung (15) abgeleitet wird, so dass dann, wenn das Mischprodukt vollständig abgeführt wurde, der Mischbehälter (2) bereits so weit mit frischer Hauptkomponente gefüllt ist, dass unverzüglich mit dem Zuführen der wenigstens einen Zusatzkomponente über die Dosier- und Fördereinrichtung (3) und/oder die Dosierleitung (4) und mit dem entsprechendem Durchmischen begonnen werden kann, wobei die Komponenten beim Mischen zur Verkürzung der Mischdauer im Mischbehälter (2) auf eine erhöhte Mischtemperatur, beispielsweise auf eine Temperatur zwischen 40°C und 90°C, beispielsweise auf eine Temperatur zwischen 80°C und 85°C und/oder auf eine Temperatur erhitzt werden, die ein Pasteurisieren des Mischproduktes bewirkt.

2. Verfahren nach Anspruch 1, **dadurch gekennzeichnet, dass** die wenigstens eine Zusatzkomponente (3) und die wenigstens eine Hauptkomponente getrennt in den Mischbehälter (2) eingebracht werden, oder dass die wenigstens eine Hauptkomponente vorgemischt mit der wenigstens einen Zusatzkomponente in den Mischbehälter (2) eingebracht wird

3. Verfahren nach einem der vorhergehenden Ansprüche, **dadurch gekennzeichnet, dass** die wenigstens eine Hauptkomponente und die wenigstens eine Zusatzkomponente derart in den Mischbehälter (2) eingebracht werden, dass sich in einem Bereich des Mischbehälters (2), an dem das fertige Mischprodukt entnommen wird, eine Schichtung aus dem fertigen Mischprodukt ausbildet.

4. Verfahren nach Anspruch 3, **dadurch gekennzeichnet, dass** die Schichtung aus der wenigstens einen Hauptkomponente und der wenigstens einen Zusatzkomponente und dem fertigen Mischprodukt an einem unteren Bereich des Mischbehälters (2) ausbildet.

5. Verfahren nach Anspruch 3, **dadurch gekennzeichnet, dass** die wenigstens eine Hauptkomponente und die wenigstens eine Zusatzkomponente in einen oberen Bereich des Mischbehälters eingeleitet werden.

6. Verfahren nach einem der vorhergehenden Ansprüche, **dadurch gekennzeichnet, dass** die wenigstens eine Hauptkomponente und/oder die wenigstens eine Zusatzkomponente als flüssige Komponente fein verteilt und/oder in Tropfenform und/oder versprüht in den Mischbehälter (2) eingebracht werden.

7. Verfahren nach einem der vorhergehenden Ansprüche, **dadurch gekennzeichnet, dass** die Qualität und/oder die Dosierung des dem Mischbehälter (2) entnommenen und der weiteren Verwendung zugeführten und/oder über die Heizeinrichtung (22) an den Mischbehälter (2) zurückgeführten Mischproduktes oder wenigstens ein Parameter, der der Qualität und/oder der Dosierung des Mischproduktes entspricht, mit einer Messeinrichtung oder einem Messgerät (13) überwacht wird.

8. Verfahren nach einem der vorhergehenden Ansprüche, **dadurch gekennzeichnet, dass** die wenigstens eine Hauptkomponente ein flüssiges Medium, und/oder eine Mischphase aus einem flüssigen Medium und aus wenigsten seiner weiteren Komponente ist, und/oder dass die wenigstens eine Zusatzkomponente von Farbpigmenten, einem Geschmack bildenden Stoff oder Medium gebildet ist.

9. Verfahren nach Anspruch 8, **dadurch gekennzeichnet, dass** es sich bei dem flüssigen Medium um Wasser und/oder ein organisches Lösungsmittel handelt, und/oder dass es sich bei dem Medium um Salze und/oder Zitronensäure und/oder Zucker und/oder Armastoff und/oder Sirup handelt.

10. Verfahren nach einem der vorhergehenden Ansprüche, **dadurch gekennzeichnet, dass** die Dosierung der wenigstens einen Hauptkomponente und der wenigstens einen Zusatzkomponente beim Einbringen in dem Mischbehälter (2) durch wenigstens eine das Gewicht des Mischbehälters (2) erfassende Wägeeinrichtung überwacht und/oder gesteuert wird, wobei die wenigstens eine Hauptkomponente und die wenigstens eine Zusatzkomponente zeitgleich oder zeitlich nacheinander in den Mischbehälter (2) eingebracht werden.

## Claims

1. Method for producing mixed products in batches, in particular for producing mixed products in the form of drinks, in each case by mixing at least one additional component with at least one liquid main component, using a single mixing container (2), from which the finished mixed product is removed by way of a line (15) for further use, wherein the mixing container (2) is provided with
- an outlet (2.1) in the base of the mixing container (2);
- a metering and delivery device (3) serves to provide for the metered feeding of a solid or dried additional component into the mixing container (2), and for this purpose opens into the upper region of the mixing container (2);
- a metering line (4) with a first control valve (5), which serves to introduce a liquid additional component into the mixing container (2) and for this purpose likewise opens into the upper region of the mixing container (2)
- a first line (6) with a second control valve (7) and a flow meter (8), which serves to feed the main component into the mixing container (2) and for this purpose opens into this container with a first inlet (9), and preferably with a second inlet (9.1);
- a second line (10) connected to the outlet (2.1) of the mixing container (2) with a temperature sensor and/or filling level sensor (11), with a pump (12), and with a measuring device (13) between the outlet (2.1) and a connection (14);
- a filling level sensor (29);
- a third line (15) with a third control valve (16), which serves to remove the finished mixed product from the mixing container (2) and out of the system (1), and for this purpose is connected to the connection (14);
- a fourth line (17) with a fourth control valve (18), and for this purpose opens with a third inlet (20) into the lower region of the mixing container (2) and is likewise connected to the container (14),
wherein the inlets of the metering and feeding device (3), of the metering line (4), and the first and, as applicable, second inlets (9, 9.1) are located in a vertical direction over the outlet (2.1) of the mixing container (2) and above the third inlet (20) of the fourth line (17),
wherein the at least one additional component is already fed to the mixing container (2) by the metering and delivery device (3) and/or via the metering line (4), and the at least one main component is then fed via the first line (6), if there is still finished mixed product in the mixing container (2) and this is removed from the mixing container (2) via the third line (15), such that, when the mixed product has been completely removed, the mixing container (2) is already filled so far with fresh main component that a start can immediately be made with the delivery of the at least one additional main component by the metering and delivery device (3) and/or the metering line (4), and with the corresponding mixing, wherein, during mixing, in order to reduce the mixing time in the mixing container (2), the components are heated to a higher mixing temperature, for example to a temperature of between 40 °C and 90 °C, for example to a temperature of between 80 °C and 85 °C, and/or to a temperature which has the effect of pasteurising the mixed product.

2. Method according to claim 1, **characterised in that** the at least one additional component (3) and the at least one main component are introduced separately into the mixing container (2), or that the at least one main component is introduced into the mixing container (2) pre-mixed with the at least one additional component.

3. Method according to any one of the preceding claims, **characterised in that** the at least one main component and the at least one additional component are introduced into the mixing container (2) in such a way that, in a region of the mixing container (2) at which the finished mixed product is removed, a layering is formed from the finished mixed product.

4. Method according to claim 3, **characterised in that** the layering is formed from the at least one main competent and the at least one additional component and the finished mixed component, at a lower region of the mixing container (2).

5. Method according to claim 3, **characterised in that** the at least one main component and the at least one additional component are introduced into an upper region of the mixing container.

6. Method according to any one of the preceding claims, **characterised in that** the at least one main component and/or the at least one additional component are introduced into the mixing container (2), finely distributed as liquid components and/or in drop form and/or sprayed.

7. Method according to any one of the preceding claims, **characterised in that** the quality and/or the metering of the mixed product taken from the mixing container (2) and conveyed for further use and/or conveyed back via the heating device (22) to the mixing container (2) and/or at least one parameter which corresponds to the quality and/or metering of the mixed product, is monitored by a measuring apparatus or a measuring device (13)

8. Method according to any one of the preceding claims, **characterised in that** the at least one main component is a liquid medium, and/or a mixing phase of a liquid medium and of at least one further component, and/or that the at least one additional component is formed from colour pigments, and a substance or medium which forms a taste effect.

9. Method according to claim 8, **characterised in that** the liquid medium is water and/or an organic solvent, and/or that the medium involves salts and/or citric acid and/or sugar and/or an aromatic substance and/or syrup.

10. Method according to any one of the preceding claims, **characterised in that** the metering of the at least one main component and of the at least one additional component at the introduction into the mixing container (2) is monitored and/or controlled by at least one weighing device, which detects the weight of the mixing container (2), wherein the at least one main component and the at least one additional component are introduced into the mixing container (2) simultaneously or one after another.

## Revendications

1. Procédé servant à fabriquer par lots des produits mélangés, en particulier servant à fabriquer des produits mélangés sous la forme de boissons, respectivement en mélangeant au moins un composant additionnel à au moins un composant principal liquide en utilisant un unique contenant de mélange (2), duquel le produit mélangé fini est évacué par l'intermédiaire d'un conduit (15) aux fins d'une utilisation ultérieure, dans lequel le contenant de mélange (2) est équipé
- d'une sortie (2.1) au niveau du fond du contenant de mélange (2) ;
- d'un dispositif de dosage et de transport (3), qui sert à amener de manière dosée un composant additionnel solide ou sec dans le contenant de mélange (2) et débouche à cet effet dans la zone supérieure du contenant de mélange (2) ;
- d'un conduit de dosage (4) avec une première soupape de commande (5), qui sert à introduire un composant additionnel liquide dans le contenant de mélange (2) et débouche à cet effet également dans la zone supérieure du contenant de mélange (2) ;
- d'un premier conduit (6) avec une deuxième soupape de commande (7) et un débitmètre (8), qui sert à amener le composant principal frais dans le contenant de mélange (2) et débouche à cet effet dans ledit contenant avec une première entrée (9), et de préférence avec une deuxième entrée (9.1) ;
- d'un deuxième conduit (10) relié à la sortie (2.1) du contenant de mélange (2) avec un capteur de température et/ou un capteur de niveau de remplissage (11), avec une pompe (12) et avec un appareil de mesure (13) entre la sortie (2.1) et un raccord (14) ;
- d'un capteur de niveau de remplissage (29) ;
- d'un troisième conduit (15) avec une troisième soupape de commande (16), qui sert à évacuer le produit mélangé fini du contenant de mélange (2) et de l'installation (1) et est relié à cet effet au raccord (14) ;
- d'un quatrième conduit (17) avec une quatrième soupape de commande (18) qui débouche à cet effet avec une troisième entrée (20) dans la zone inférieure du contenant de mélange (2) et est relié également au raccord (14),
dans lequel les entrées du dispositif de dosage et de transport (3), du conduit de dosage (4) ainsi que les première et éventuellement deuxième entrées (9, 9.1) se trouvent dans la direction verticale au-dessus de la sortie (2.1) du contenant de mélange (2) et au-dessus de la troisième entrée (20) du quatrième conduit (17),
dans lequel
l'au moins un composant additionnel est amené au contenant de mélange (2) par l'intermédiaire du dispositif de dosage et de transport (3) et/ou par l'intermédiaire du conduit de dosage (4) et l'au moins un composant principal lui est amené par l'intermédiaire du premier conduit (6) alors que du produit mélangé fini se trouve encore dans le contenant de mélange (2) et que celui-ci est acheminé hors du contenant de mélange (2) par l'intermédiaire du troisième conduit (15) de sorte que quand le produit mélangé est évacué en totalité, le contenant de mélange (2) est alors si largement rempli de composant principal frais que l'amenée de l'au moins un composant additionnel par l'intermédiaire du dispositif de dosage et de transport (3) et/ou du conduit de dosage (4) et le mélangeage correspondant peuvent commencer sans délai, dans lequel les composants sont chauffés lors du mélangeage à une température de mélangeage élevée, par exemple à une température entre 40 °C et 90 °C, par exemple à une température entre 80 °C et 85 °C et/ou à une température qui entraîne une pasteurisation du produit mélangé, pour réduire le temps de mélangeage dans le contenant de mélange (2).

2. Procédé selon la revendication 1, **caractérisé en ce que** l'au moins un composant additionnel (3) et l'au moins un composant principal sont introduits séparément dans le contenant de mélange (2), ou que l'au moins un composant principal mélangé au préalable avec l'au moins un composant additionnel est introduit dans le contenant de mélange (2).

3. Produit selon l'une quelconque des revendications précédentes, **caractérisé en ce que** l'au moins un composant principal et l'au moins un composant additionnel sont introduits de telle manière dans le contenant de mélange (2) qu'une couche composée du produit mélangé fini se forme dans une zone du contenant de mélange (2), au niveau de laquelle le produit mélangé fini est prélevé.

4. Procédé selon la revendication 3, **caractérisé en ce que** la couche est formée à partir de l'au moins un composant principal et de l'au moins un composant additionnel et du produit mélangé fini au niveau d'une zone inférieure du contenant de mélange (2).

5. Procédé selon la revendication 3, **caractérisé en ce que** l'au moins un composant principal et l'au moins un composant additionnel sont acheminés dans une zone supérieure du contenant de mélange.

6. Procédé selon l'une quelconque des revendications précédentes, **caractérisé en ce que** l'au moins un composant principal et/ou l'au moins un composant additionnel sont introduits de manière répartie avec précision en tant que composant fluide et/ou sous la forme de gouttes et/ou de manière pulvérisée dans le contenant de mélange (2).

7. Procédé selon l'une quelconque des revendications précédentes, **caractérisé en ce que** la qualité et/ou le dosage du produit mélangé prélevé du contenant de mélange (2) et amené aux fins d'une utilisation ultérieure et/ou ramené au contenant de mélange (2) par l'intermédiaire du dispositif de chauffage (22) ou au moins un paramètre, qui correspond à la qualité et/ou au dosage du produit mélangé, sont surveillés avec un dispositif de mesure ou un appareil de mesure (13).

8. Procédé selon l'une quelconque des revendications précédentes, **caractérisé en ce que** l'au moins un composant principal est un milieu liquide et/ou une phase de mélange composée d'un milieu liquide et d'au moins son autre composant, et/ou que l'au moins un composant additionnel est formé par des pigments de couleur, une substance ou un milieu formant le goût.

9. Procédé selon la revendication 8, **caractérisé en ce que** le milieu fluide est de l'eau et/ou un solvant organique, et/ou que le milieu est des sels et/ou de l'acide citrique et/ou du sucre et/ou un arôme et/ou du sirop.

10. Procédé selon l'une quelconque des revendications précédentes, **caractérisé en ce que** le dosage de l'au moins un composant principal et de l'au moins un composant additionnel est surveillé et/ou commandé lors de l'introduction dans le contenant de mélange (2) par au moins un dispositif de pesage détectant le poids du contenant de mélange (2), dans lequel l'au moins un composant principal et l'au moins un composant additionnel sont introduits simultanément ou l'un après l'autre dans le contenant de mélange (2).
